(19)

Europäisches Patentamt
European Patent Office
Office européen des brevets

(11) **EP 4 397 666 A1**

(12) **EUROPEAN PATENT APPLICATION**
published in accordance with Art. 153(4) EPC

(43) Date of publication:
**10.07.2024 Bulletin 2024/28**

(21) Application number: **22864899.4**

(22) Date of filing: **09.08.2022**

(51) International Patent Classification (IPC):
*C07F 7/28* (2006.01)     *A61L 9/01* (2006.01)
*F24F 1/008* (2019.01)     *F24F 8/24* (2021.01)

(52) Cooperative Patent Classification (CPC):
**A61L 9/01; C07F 7/28; F24F 1/008; F24F 8/24**

(86) International application number:
**PCT/KR2022/011852**

(87) International publication number:
**WO 2023/033394 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021   KR 20210114705**
**25.07.2022   KR 20220091911**

(71) Applicant: **LG Chem, Ltd.**
**Yeongdeungpo-gu**
**Seoul 07336 (KR)**

(72) Inventors:
• **PARK, Kyo Sung**
**Daejeon 34122 (KR)**

• **CHOI, Min Ki**
**Daejeon 34122 (KR)**
• **LEE, Tae Hee**
**Daejeon 34122 (KR)**
• **KWON, Se Hyun**
**Daejeon 34122 (KR)**
• **PARK, Do Young**
**Daejeon 34122 (KR)**
• **SHIN, Chang Hoon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ORGANIC COMPOUND ADSORBENT AND GAS BLOWING APPARATUS COMPRISING SAME**

(57)     The present invention relates to an organic compound adsorbent and a gas blower including the same, wherein the metal organic framework has a BET specific surface area of 500 m2/g or more, and the relationship between the average diameter of the unit pore inlets and the average diameter inside the unit pores of the metal organic framework satisfies Equation 1, and thus, even in a dynamic gas flow having a flow rate of 1 cm/sec or more, the adsorption amount and the adsorption rate of volatile organic compounds may be improved, and therefore volatile organic compounds can be efficiently adsorbed in environments having a gas flow, such as an air purifier and an air conditioner.

[FIG. 3]

(100) (300) (200)

EP 4 397 666 A1

**Description**

## TECHNICAL FIELD

Cross-reference to Related Applications

This application claims priority from Korean Patent Application Nos. 10-2021-0114705, filed on August 30, 2021, and 10-2022-0091911, filed on July 25, 2022, the disclosures of which are incorporated by reference herein.

Technical Field

The present invention relates to an organic compound adsorbent and a gas blower including the same, and more specifically, to an organic compound adsorbent which can improve the adsorption amount and adsorption rate of a volatile organic compound under a condition of dynamic gas flow, and a gas blower including the organic compound adsorbent.

## BACKGROUND ART

Among gases, substances such as fine dust, ultrafine dust, harmful gases, germs, fungi, and viruses are floating, and these floats cause diseases and have a bad effect on health. In particular, volatile organic compounds are air pollutants and toxic compounds having carcinogenicity and have a very harmful effect on the human body.
In order to reduce such volatile organic compounds, an organic compound adsorbent including activated carbon has been used in an air purifier, an air purification filter, an air conditioner, and the like, but there has been a limitation in that while the organic compound adsorbent exhibits excellent effects in removing toluene from the volatile organic compounds, the performance of removing formaldehyde and ammonia is weak.
Recently, the metal organic framework (MOF), which is a porous organic metal structure, has been reported to be capable of improving the performance of removing formaldehyde and ammonia from volatile organic compounds, but there has been a limitation in that the performance of removing volatile organic compounds is deteriorated under a condition of dynamic gas flow, such as an air purifier or an air conditioner. Although the same MOF is used, each MOF is different in a size of the unit pore inlet, a size inside the unit pore, or a shape of the pore, and thus there has been a limitation in that there may occur a difference in the content of the volatile organic compounds adsorbed inside the pores, and the difference occurs more in a condition of dynamic gas flow than in a condition of static gas flow.
Therefore, there is a need for research on a structure of a metal organic framework capable of adsorbing a large amount of volatile organic compounds in a short time even under a condition of dynamic gas flow.

## DISCLOSURE OF THE INVENTION

### TECHNICAL PROBLEM

To solve the above-described limitations, an aspect of the present invention is intended to provide an organic compound adsorbent capable of improving the adsorption amount and adsorption rate of volatile organic compounds adsorbed inside the pores under a condition of dynamic gas flow by optimizing a BET specific surface area of the metal organic framework, the average diameter range of the unit pore inlet of the metal organic framework, and the average diameter range inside the unit pores, based on the relationship between the structure of the metal organic framework and the adsorption ability of the volatile organic compounds, and a gas blower including the organic compound adsorbent.

### TECHNICAL SOLUTION

According to an aspect of the present invention, there are provided an organic compound adsorbent and a gas blower.

(1) According to an aspect of the present invention, there is provided an organic compound adsorbent including: a metal organic framework which contains variable pores by a binding structure of metal ions and organic ligands, has a BET specific surface area of 500 m$^2$/g or more, and satisfies Equation 1 below under gas flow having a flow rate of 1 cm/sec or more; and a carbonaceous support supported with the metal organic framework.

[Equation 1]

$$0.4 \leq x(nm)/y(nm) \leq 1.0$$

In Equation 1 above,

> x is the average diameter (nm) of the unit pore inlets of the metal organic framework as measured by at least one method among an X-ray diffraction, a gas adsorption, and a mercury porosimeter, and
> y is the average diameter (nm) inside the unit pores of the metal organic framework as measured by at least one method among an X-ray diffraction, a gas adsorption, and a mercury porosimeter.

(2) In (1) above of the present invention, there is provided the organic compound adsorbent wherein x above may be 0.2 nm to 1.4 nm, and y above may be 0.5 nm to 2.2 nm.

(3) In (1) or (2) above of the present invention, there is provided the organic compound adsorbent wherein x above may be 0.35 nm to 1.2 nm, and y above may be 0.7 nm to 2.0 nm.

(4) In any one of (1) to (3) above of the present invention, there is provided the organic compound adsorbent wherein the metal organic framework may have a removal rate constant value of 0.03 or more calculated by Equation 2 below:

[Equation 2]

$$C_t = C_i \times e^{-kt}$$

In Equation 2 above,

> $C_t$ denotes the concentration of formaldehyde after t minutes.
> $C_i$ denotes the concentration of formaldehyde at an initial stage,
> k denotes the removal rate constant, and
> t denotes the elapsed time (min).

(5) In any one of (1) to (4) above of the present invention, there is provided the organic compound adsorbent wherein the metal organic framework may have a BET specific surface area of 800 $m^2$/g or more.

(6) In any one of (1) to (5) above of the present invention, there is provided the organic compound adsorbent wherein the metal ion may be an ion of at least one metal selected from the group consisting of sodium (Na), potassium (K), rubidium (Rb), calcium (Ca), strontium (Sr), barium (Ba), scandium (Sc), yttrium (Y), hafnium (Hf), niobium (Nb), chromium (Cr), silver (Ag), indium (In), germanium (Ge), tin (Sn), aluminum (Al), iron (Fe), molybdenum (Mo), tungsten (W), vanadium (V), zinc (Zn), zirconium (Zr), copper (Cu), magnesium (Mg), manganese (Mn), nickel (Ni), titanium (Ti), and lanthanide-based transition metals.

(7) In any one of (1) to (6) above of the present invention, there is provided the organic compound adsorbent wherein the organic ligand may include at least two functional groups capable of bonding to the metal ion.

(8) In any one of (1) to (7) above of the present invention, there is provided the organic compound adsorbent wherein the organic ligand may be at least one selected from the group consisting of imidazole, alkylimidazole, alkoxyimidazole, terephthalic acid, aminoterephthalic acid, trimesic acid, fumaric acid, and maleic acid.

(9) In any one of (1) to (8) above of the present invention, there is provided the organic compound adsorbent wherein the carbonaceous support may include at least one selected from the group consisting of carbon nanotubes, graphene, graphite, amorphous carbon, carbon black, and activated carbon.

(10) In any one of (1) to (9) above of the present invention, there is provided the organic compound adsorbent wherein the adsorbent may contain the metal organic framework in an amount of 3-95 parts by weight with respect to 100 parts by weight of the carbonaceous support.

(11) According to another aspect of the present invention, there is provided a gas blower including the organic compound adsorbent according to any one of (1) to (10) above and having a gas flow rate.

**ADVANTAGEOUS EFFECTS**

According to the present invention, the metal organic framework has a BET specific surface area of 500 $m^2$/g or more, and the relationship between the average diameter of the unit pore inlets and the average diameter inside the unit pores of the metal organic framework satisfies Equation 1. Thus, even in a dynamic gas flow having a flow rate of 1 cm/sec or more, the adsorption amount and the adsorption rate of volatile organic compounds may be improved, and therefore volatile organic compounds can be efficiently adsorbed in environments having a gas flow rate, such as an air purifier and an air conditioner.

## BRIEF DESCRIPTION OF THE DRAWINGS

FIG. 1 is a schematic diagram of a measuring device for evaluating the volatile organic compound removal performance of an organic compound adsorbent of the present invention.
FIG. 2 is a graph showing the amount of decrease in formaldehyde in the organic compound adsorbent of the present invention over time as measured through the measuring device.
FIG. 3 shows an image obtained by visualizing the crystal structure of the metal organic framework of Example 1 through a visualization program (Mercury).

## MODE FOR CARRYING OUT THE INVENTION

Terms or words used in this specification and claims should not be interpreted as being limited to a conventional or dictionary meaning, and should be interpreted as the meaning and concept that are consistent with the technical spirit, based on the principle that an inventor can appropriately define the concepts of terms in order to explain the invention in the best ways.

In the present invention, the diameter may be defined as a length of a longest straight line among straight lines connecting two different points in a circle, an oval, or a polygon forming a cross-section of a unit pore of a metal organic framework.

In addition, in the present invention, the average diameter may be defined as a diameter at a cumulative volume of 50% from the diameter distribution measured using any one or more of an X-ray diffraction, a gas adsorption, and a mercury porosimeter.

In addition, in the present invention, the average diameter inside the unit pores may mean the average depth inside the unit pores of the metal organic framework.

The metal organic framework is also referred to as the MOF, and is a crystalline organic-inorganic hybrid material in which metal ions or ion clusters are connected by an organic ligand acting as a linker to form a network of a primary, secondary, or tertiary structure.

Such a metal organic framework may be prepared by microwave heating synthesis for heating reactants using interaction between electromagnetic waves and a charged body, electrochemical synthesis using solvent heat after combining metal cationic materials such as Zn and Cu with linkers such as $1,3,5\text{-}H_3BTC$ and $H_2BDC(OH)_2$, or mechanochemical synthesis using a chemical conversion process after destroying intramolecular bonds.

Also, the metal organic framework can be used as a drug carrier in the field of biomedicine by regulating the functional groups on the surface of the metal organic framework or finely changing the pore size, and the metal organic framework contains metal ions or ion clusters, and thus can also be used as a heterogeneous catalyst in a catalytic reaction, an anaerobic olefin oxidation reaction, an olefin epoxidation reaction, a Friedel-Crafts benzylation reaction, and the like.

In particular, the metal organic framework has a porous structure in which an empty space exists in the skeleton. Due to the porous structure of the metal organic framework, the metal organic framework has a high gas storage capacity and can reversibly adsorb or desorb gas under mild conditions, and thus can be used in a field in which gases such as hydrogen, methane, and carbon dioxide are stored, and can selectively separate a specific gas from a gas mixture.

In addition, due to the porous structure of such a metal organic framework, the metal organic framework has adsorbability to various organic compounds, and particularly exhibits excellent adsorbability to volatile organic compounds (VOCs). The volatile organic compound is a generic term for a liquid or gaseous organic compound that is easily evaporated into the atmosphere, and is an air pollutant and a toxic chemical having carcinogenicity, which is also a precursor of photochemical oxide. There are naturally emitted compounds and artificially emitted compounds according to emission sources, and particularly, compounds such as formaldehyde and ammonia are problematic, and the organic compound adsorbent containing the metal organic framework exhibits more excellent adsorbability to volatile organic compounds than zeolite or activated carbon that has been widely used in the related art.

In general, the structure of the porous metal organic framework may have a form in which the average diameter inside the unit pores is larger than the average diameter of the unit pore inlets. Accordingly, volatile organic compound molecules that enter into the pores of the metal organic framework may not be re-desorbed and may be adsorbed inside the pores. In addition, in an environment of static gas flow, the average diameter inside the unit pores of the metal organic framework is increased so that the space, inside the pore, in which the volatile organic compounds can be adsorbed is increased, thereby improving the amount of the volatile organic compounds adsorbed.

However, even if the average diameter inside the unit pores of the metal organic framework is increased in an environment of dynamic gas flow such as an air purifier or an air conditioner, there is a limitation in that the volatile organic compounds may not enter into the pores due to rapid gas flow. In addition, when the average diameter of the unit pore inlets is increased in order for the volatile organic compounds to enter into the pores, there is a limitation in that the volatile organic compounds adsorbed inside the pores are re-desorbed. Accordingly, even if the metal organic framework is included in the organic compound adsorbent in order to adsorb the volatile organic compounds, there is a limitation in that the amount or rate of adsorbing the volatile organic compounds is reduced under a condition of dynamic gas flow, and thus there is a limitation in application to an air purifier or an air conditioner in a condition of dynamic gas flow.

As a result of a significant amount of research conducted for solving a limitation in that when the metal organic framework which has been conventionally used for adsorbing the volatile organic compounds is applied to an environment of gas flow such as an air purifier or an air conditioner, the adsorption amount and the adsorption rate of volatile organic compounds are reduced, the present inventors found that when the metal organic framework has a BET specific surface area of 500 m$^2$/g or more and the relationship between the average diameter of the unit pore inlets of the metal organic framework and the average diameter inside the unit pores satisfies a specific condition, the adsorption amount and the adsorption rate of volatile organic compounds can be improved even in dynamic gas (e.g., air) flow having a flow rate of 1 cm/sec, and completed the present invention.

According to an aspect of the present invention, there is provided an organic compound adsorbent including: a metal organic framework which contains variable pores by a binding structure of metal ions and organic ligands, has a BET specific surface area of 500 m$^2$/g or more, and satisfies Equation 1 below under gas flow having a flow rate of 1 cm/sec or more; and a carbonaceous support supported with the metal organic framework.

$$[\text{Equation 1}]$$

$$0.4 \leq x(nm)/y(nm) \leq 1.0$$

In Equation 1 above, x is the average diameter (nm) of the unit pore inlets of the metal organic framework as measured by at least one method among an X-ray diffraction, a gas adsorption, and a mercury porosimeter, and y is the average diameter (nm) inside the unit pores of the metal organic framework as measured by at least one method among an X-ray diffraction, a gas adsorption, and a mercury porosimeter.

The metal organic framework of the present invention contains variable pores by a binding structure of metal ions and organic ligands. The variable pores may mean that the diameter of the pore is not fixed but changes depending on a specific environment. Specifically, the organic ligands constituting the metal organic framework may have a characteristic in that the organic ligands are not fixed at room temperature but rotate about an axis that is bonded to metal ions, and thus the shape of the metal organic framework, the average diameter of the unit pore inlets of the metal organic framework, and the average diameter inside the unit pores may change according to the rotation of the organic ligands. In particular, when the metal organic framework is placed under a dynamic condition in which the flow of the surrounding gas has a specific flow rate, the average diameter of the unit pore inlets of the metal organic framework and the average diameter inside the unit pores may change.

In Equation 1 above, x/y, which is the average diameter value of the unit pore inlets of the metal organic framework/the average diameter value inside the unit pores, may be 0.4 or more, 0.45 or more, 0.5 or more, 0.53 or more, 0.55 or more, 0.58 or more, 1.0 or less, 0.95 or less, 0.9 or less, 0.85 or less, 0.8 or less, 0.75 or less, 0.7 or less, 0.65 or less, or 0.6 or less.

In Equation 1, when the average diameter (nm) of the unit pore inlets of the metal organic framework/the average diameter (nm) inside the unit pores of the metal organic framework deviates from the lower limit of the numerical range, the time required for the metal organic framework and the volatile organic compound to be in contact with each other is shorter than the time required for the metal organic framework to adsorb the volatile organic compound contained in the gas having the flow rate, and thus the effect of the metal organic framework adsorbing the volatile organic compound may be significantly reduced.

In addition, in Equation 1 above, when the average diameter (nm) of the unit pore inlets of the metal organic framework/the average diameter (nm) inside the unit pores of the metal organic framework deviates from the upper limit of the numerical range, the volatile organic compounds adsorbed in the pores of the metal organic framework may easily escape through the pore inlets of the metal organic framework, and thus there may occur a limitation in that the ratio of the volatile organic compounds to be re-desorbed from the metal organic framework is significantly increased. In addition, the metal organic framework of the present invention may have a BET specific surface area of 500 m$^2$/g or more, 800 m$^2$/g or more, 1,000 m$^2$/g or more, or 1,500 m$^2$/g or more.

In addition, in Equation 1 above, x may be 0.2 nm to 1.4 nm, and y may be 0.5 nm to 2.2 nm. More specifically, in Equation 1 above, x may be 0.2 nm or more, 0.25 nm or more, 0.3 nm or more, 0.35 nm or more, 0.4 nm or more, 1.4 nm or less, 1.3 nm or less, or 1.2 nm or less. In addition, in Equation 1 above, y may be 0.5 nm or more, 0.6 nm or more, 0.7 nm or more, 2.2 nm or less, 2.1 nm or less, or 2.0 nm or less.

The pore diameter of the metal organic framework satisfying the above-described range may reduce the rate at which the adsorbed volatile organic compounds are re-desorbed without deteriorating the performance of adsorbing the volatile organic compounds having a large molecular weight, thereby improving the adsorption rate as well as the amount of adsorbing the volatile organic compounds in the dynamic gas flow having a flow rate of 1 cm/sec or more.

According to an embodiment of the present invention, the organic compound adsorbent of the present invention may be an organic compound adsorbent in which the metal organic framework has a removal rate constant value of 0.03 or more calculated by Equation 2 below:

$$[Equation\ 2]$$

$$C_t = C_i \times e^{-kt}$$

In Equation 2 above,

$C_t$ denotes the concentration ($\mu$mol/mol) of an organic compound of interest after t minutes, $C_i$ denotes the concentration ($\mu$mol/mol) of the organic compound of interest at an initial stage, k denotes the removal rate constant, and t denotes the elapsed time (min).

The organic compound of interest may be formaldehyde or ammonia, and specifically, formaldehyde. The removal rate constant k may be obtained from a linear regression analysis for t and $\ln C_t$. The value of the removal rate constant k is an index from which the adsorption amount and the adsorption rate of the organic compound adsorbent may be confirmed, and when the value of the removal rate constant k satisfies the numerical range of 0.03 or more, the optimum adsorption amount and the adsorption rate for adsorbing volatile organic compounds in the dynamic gas flow may be achieved.

Meanwhile, the metal organic framework of the present invention is composed of a bonding structure of metal ions and organic ligands, and the metal ion may be an ion of at least one metal selected from the group consisting of sodium (Na), potassium (K), rubidium (Rb), calcium (Ca), strontium (Sr), barium (Ba), scandium (Sc), yttrium (Y), hafnium (Hf), niobium (Nb), chromium (Cr), silver (Ag), indium (In), germanium (Ge), tin (Sn), aluminum (Al), iron (Fe), molybdenum (Mo), tungsten (W), vanadium (V), zinc (Zn), zirconium (Zr), copper (Cu), magnesium (Mg), manganese (Mn), nickel (Ni), titanium (Ti), and lanthanide-based transition metals.

In addition, the organic ligand may include at least two functional groups capable of bonding to the metal ion, for example, may be a compound including a functional group containing nitrogen (N), oxygen (O), or sulfur (S), and specifically, may be one or more selected from the group consisting of imidazole, alkylimidazole, alkoxyimidazole, terephthalic acid, aminoterephthalic acid, trimesic acid, fumaric acid, and maleic acid.

In addition, the metal organic framework of the present invention may be a Materials Institute Lavoisier (MIL)-based metal organic framework, and preferably may be MIL-125 (Ti) containing a titanium-based (Ti) metal.

In addition, the metal organic framework of the present invention may have a moisture adsorption amount of 40 wt% or less as measured at a relative humidity of 100% or less. Specifically, the metal organic framework of the present invention may have a moisture adsorption amount of 40 wt % or less, 30 wt % or less, 20 wt % or less, or 10 wt % or less as measured at a relative humidity of 100% or less.

According to an embodiment of the present invention, there is provided an organic compound adsorbent including a support supported with the metal organic framework. The support may be a carbonaceous support, and may include at least one selected from the group consisting of carbon nanotubes, graphene, graphite, amorphous carbon, carbon black, and activated carbon. In addition, it is preferable to use activated carbon having excellent toluene adsorption performance in consideration of the fact that the performance of adsorbing toluene among the volatile organic compounds of the metal organic framework is relatively inferior.

In addition, the metal organic framework may be contained in an amount of 3-95 parts by weight, 30-95 parts by weight, 50-90 parts by weight, or 50-80 parts by weight with respect to 100 parts by weight of the support. By satisfying the above-described range, there is an effect of reducing the phenomenon that the metal organic framework is detached by the external gas without deteriorating deodorizing properties.

The metal organic framework may be supported on the carbonaceous support in the form of powder, granules, or a coating, or may be supported between the carbonaceous supports. In addition, the organic compound adsorbent may be prepared by filling the metal organic framework between the carbonaceous supports in the form of a nonwoven fabric, the carbonaceous supports may be formed in the form of a mesh, and the carbonaceous supports may be adjusted in the form of a mesh having an appropriate size as necessary in order to prevent the metal organic framework from escaping to the outside of the organic compound adsorbent. When the carbonaceous support is formed in the form of a mesh, the carbonaceous support may have a mesh diameter of 160 um or less, 150 um or less, 140 um or less, 130 um or less, or 120 um or less. The organic compound adsorbent may be a desiccant or a deodorizer.

In addition, according to another embodiment of the present disclosure, there is provided a gas blower including the organic compound adsorbent and having a gas flow rate. Specifically, the gas blower may be used without limitation in a product requiring an organic compound adsorbent among products having a gas flow rate, and for example, may be applied to various products such as an air purifier and an air conditioner.

Hereinafter, the present invention will be described in detail with reference to specific examples. However, the following examples are intended to illustrate the present invention, and the scope of the present specification is not limited thereto.

**Examples and Comparative Examples**

**Example 1**

3.0 g of terephthalic acid was dissolved in 60 mL of dimethylformamide, and then 3 mL of anhydrous methanol and 3 mL of titanium isopropoxide were mixed therewith. This mixture was transferred to a 200-mL teflon vessel, then to a stainless steel autoclave, and then heated at 150 °C for 24 hours. After the mixture was cooled to room temperature, the formed white solid was obtained using a filter method, then washed once with 20 mL of DMF and three times with 40 mL of methanol, and then dried in a 100 °C vacuum oven to obtain a metal organic framework.

**Example 2**

3.15 g of zirconium tetrachloride and 2.45 g of 2-aminoterephthalic acid were dissolved in 519 mL of dimethylformamide and then heated in an oven at 120 °C for 6 hours without stirring. After the mixture was cooled to room temperature, the formed pale yellow solid was obtained using a filter method, then washed once with 100 mL of DMF and three times with 100 mL of methanol, and then dried in a 120 °C vacuum oven to obtain a metal organic framework.

**Example 3**

8.1 g of fumaric acid and 23 g of dichloro(oxo)zirconium octahydrate were dissolved in a mixed solvent of 3,500 mL of dimethylformamide and 530 mL of formic acid, and then the resultant mixture was heated in an oven at 120 °C for 24 hours without stirring. After the mixture was cooled to room temperature, the formed pale white solid was obtained using a filter method, then washed once with 200 mL of DMF and three times with 1,000 mL of methanol, and then dried in a 150 °C vacuum oven to obtain a metal organic framework.

**Comparative Example 1**

3.5 g of zirconium tetrachloride and 2.5 g of terephthalic acid were dissolved in 155 mL of dimethylformamide, and then 1.5 mL of 36% aqueous hydrochloric acid solution was mixed therewith. The resulting mixture was heated in an oven at 120 °C for 24 hours without stirring. After the mixture was cooled to room temperature, the formed white solid was obtained using a filter method, then washed once with 100 mL of DMF and three times with 100 mL of methanol, and then dried in a 120 °C vacuum oven to obtain a metal organic framework.

**Comparative Example 2**

Solution 1 was prepared by dissolving 5.94 g of zinc nitrate hexahydrate in 30 mL of distilled water, and Solution 2 was prepared by mixing 3.28 g of 2-methylimidazole, 50 mL of triethylamine, and 37.6 g of a saturated aqueous ammonia solution. Solution 1 and Solution 2 were mixed and stirred at room temperature for 10 minutes, and then the formed white solid was obtained by using centrifugation. The white solid was washed once with 100 mL of DMF and three times with 100 mL of methanol, and then dried in a 120 °C vacuum oven to obtain a metal organic framework.

**Comparative Example 3**

4.75 g of magnesium nitrate hexahydrate and 11.6 g of 2,6-dihydroxyterephthalic acid were dissolved in 440 mL of dimethylformamide. This solution was mixed with 30 mL of ethanol and 30 mL of aqueous solution and then the resultant mixture was heated in a 125 °C oven for 15 hours. After the mixture was cooled to room temperature, the formed dark yellow solid was obtained using a filter, then washed once with 200 mL of DMF and three times with 100 mL of methanol, and then dried in a 120 °C vacuum oven to obtain a metal organic framework.

**Experimental Examples**

**Experimental Example 1**

For the metal organic framework of Examples and Comparative Examples, the average diameter of the unit pore inlets, the average diameter inside the unit pores, the BET specific surface area, and the VOC removal performance were measured by the following method, and the measurement results are shown in Table 1 below. In addition, a clean air delivery rate (CADR) and a removal rate constant were calculated to compare the removal performance of Examples and Comparative Examples after measuring the VOC removal performance, and the results are shown in Table 1 below.

1) Measurement of the average diameter of the unit pore inlets and the inside of the pores: The synthesis of each of Examples and Comparative Examples was confirmed by obtaining the crystal structure of the metal organic framework by visualizing the crystal information file (CIF) of the metal organic framework as measured from the X-ray diffraction analysis (XRD equipment and conditions: Bruker SMART Apex Diffractometer, Mo K$\alpha$ radiation, 0.71073A wavelength, 30 sec/frame, Angle 0-180 deg) through a visualization program (Mercury). Then, by using the single crystal structure included in the Cambridge Structural Database (CSD), the average diameter of the unit pore inlets was measured by measuring the center distance between two atoms that are farthest among the atoms constituting the inlet of the unit pore of the metal organic framework. In addition, a method for measuring the average diameter inside the unit pores was performed in the same manner as the method for measuring the average diameter of the unit pore inlets, except that the center distance between two atoms that are farthest among the atoms constituting the inside of the unit pores of the organic metal structure was measured.

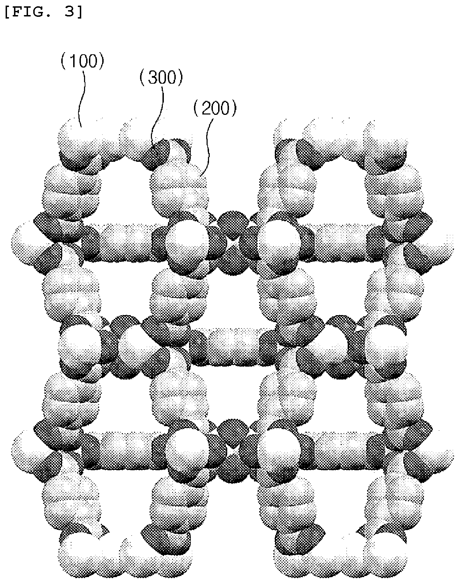

FIG. 3 shows an image obtained by visualizing the crystal structure of the metal organic framework of Example 1 through a visualization program (Mercury). Referring to FIG. 3, the image shows an average position of atoms constituting the crystal structure of the metal organic framework by repeatedly photographing the crystal structure of the metal organic framework through the visualization program.

2) Measurement of BET specific surface area: The surface area was measured by a nitrogen low-temperature adsorption method using BELSORP-max II manufactured by BEL Japan. Each metal organic framework was heated in vacuum at 120 °C for 12 hours to remove moisture and residual solvent contained in the metal organic framework. In a state in which the vacuum-dried metal organic framework is cooled with liquid nitrogen, an adsorption curve of nitrogen gas is measured, and then a surface area is measured with the BET method using the adsorption curve.

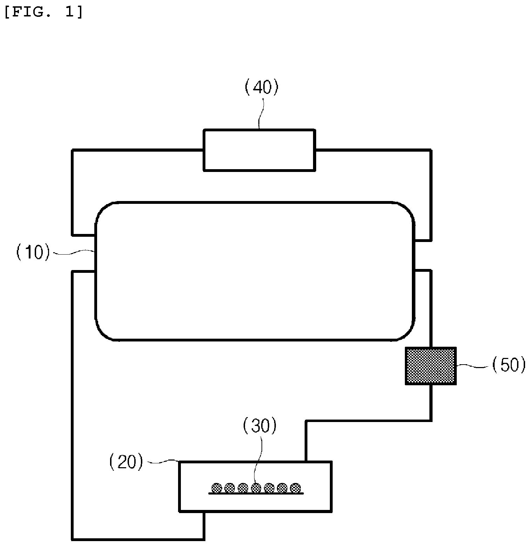

3) Measurement of VOC removal performance: The VOC removal performance of the metal organic framework was measured using the measuring device shown in FIG. 1. FIG. 1 is a schematic diagram of a measuring device for evaluating the volatile organic compound removal performance of an organic compound adsorbent of the present invention.

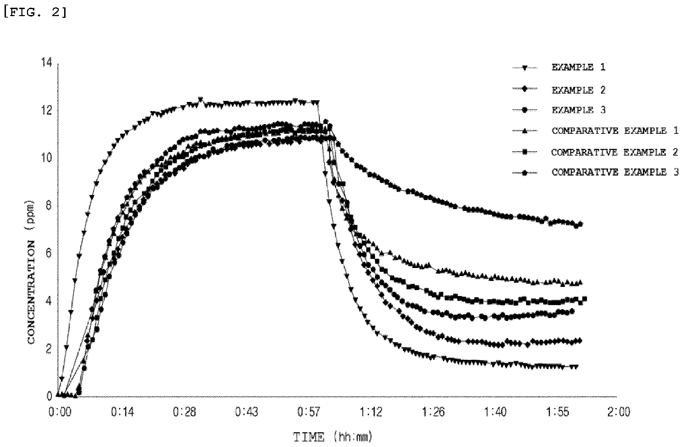

After injecting a mixed gas of formaldehyde and nitrogen having a concentration of 30-50 ppm stored in an external bombe into a mixing tank 10, nitrogen was added to dilute the concentration of formaldehyde in the mixing tank to 10 ppm. After the concentration of 10 ppm was stabilized, formaldehyde was injected into the holder 20 containing the metal organic framework 30 in a powder state. The formaldehyde gas injected into the holder was injected in an amount of 3 L per minute using a pump 50, and the volume of the holder 20 was about 39 cm$^3$, and the flow rate through the metal organic framework was measured as 76.4 cm/min. While the injected formaldehyde passes through the sample and is removed through adsorption, the concentration of formaldehyde decreases, and the change in the concentration of formaldehyde by time was recorded by measuring the concentration of formaldehyde using the measuring device 40. Accordingly, a graph showing a decrease in formaldehyde by time of each metal organic framework is shown in FIG. 2.

4) Calculation of removal rate constant k and CADR: The removal rate constant k may be calculated by Equation 2 below, and CADR may be calculated by Equation 3 below. The CADR is an index used to evaluate the performance of the air purifier and indicates an amount of air that may be purified per unit area and unit time.

$$[\text{Equation 2}]$$

$$C_t = C_i \times e^{-kt}$$

In Equation 2 above,
$C_t$ denotes the concentration ($\mu$mol/mol) of an organic compound of interest after t minutes, $C_i$ denotes the concentration ($\mu$mol/mol) of the organic compound of interest at an initial stage, k denotes the removal rate constant, and

t denotes the elapsed time (min).

[Equation 3]

$$CADR= -(V/t) \times (\ln(C_{t2}/C_{i2}) - \ln(C_{t1}/C_{i1}))$$

In Equation 3 above,

CADR denotes the purification capability ($m^3$/min), V denotes the test chamber volume ($m^3$), T denotes the measurement time (min) during the reduced operation, $C_{i1}$ denotes the particle concentration (numbers/$cm^3$) at the measurement starting point t=0 when naturally reduced, $C_{i2}$ denotes the particle concentration (numbers/$cm^3$) at the measurement starting point t=0 during the reduced operation, $C_{t1}$ denotes the particle concentration (numbers/$cm^3$) at the measurement time, t minute, when naturally reduced, and $C_{t2}$ denotes the particle concentration (numbers/$cm^3$) at the measurement time, t minute, during the reduced operation.

[Table 1]

| Divisio n | Examp le 1 | Examp le 2 | Examp le 3 | Comparat ive Example 1 | Comparat ive Example 2 | Comparat ive Example 3 |
|---|---|---|---|---|---|---|
| k (remova l rate constan t) | 0.069 | 0.052 | 0.034 | 0.021 | 0.029 | 0.01 |
| CADR | 0.5 | 0.4 | 0.3 | 0.2 | 0.2 | 0.1 |
| BET ($m^2$/ g) | 1,530 | 800 | 990 | 1, 100 | 1,340 | 150 |
| Pore inlet (Ap, nm) | 1.137 | 0.394 | 0.57 | 0.5345 | 0.58 | 1.6605 |
| Pore inside (Ca, nm) | 1.961 3 | 0.744 | 1.028 5 | 1.4685 | 1.69 | 1.6605 |
| Ap/Ca | 0.58 | 0.53 | 0.55 | 0.36 | 0.34 | 1 |

FIG. 2 is a graph showing the amount of decrease in formaldehyde in the organic compound adsorbent of the present invention over time as measured through the measuring device. Referring to Table 1 above and FIG. 2, it can be seen that Examples 1 to 3 satisfy the average diameter of the inlet and the inside of the unit pores of the metal organic framework and Equation 1 above, and further, the BET specific surface area is 500 $m^2$/g or more, and thus the removal rate constant k value is exhibited high as 0.03 or more. On the other hand, it can be seen that Comparative Examples 1 and 2 do not satisfy the average diameter of the inlet and the inside of the pores and Equation 1 even though the BET specific surface area is 1,000 $m^2$/g or more, and thus the removal rate constant value is less than 0.03, which is relatively lower than Examples. In addition, it can be seen that Comparative Example 3 satisfies Equation 1, but the BET specific surface area value corresponds to less than 500 $m^2$/g, and thus the removal rate constant value is remarkably low. Accordingly, it can be confirmed that as in the present invention, when the average diameter values of the inlet and the inside of the pores of the metal organic framework and the numerical range of Equation 1 are satisfied, and at the same time, the BET specific surface area value is 500 $m^2$/g or more, the metal organic framework having the most efficient adsorption amount and adsorption rate can be obtained, and an organic compound adsorbent containing the metal organic framework can be obtained.

| | |
|---|---|
| 10: | Mixing tank |
| 20: | Holder |
| 30: | Organic compound adsorbent |
| 40: | VOC concentration measuring device |
| 50: | Pump |
| 100: | Titanium atom |
| 200: | Carbon atom |
| 300: | Oxygen atom |

**Claims**

1. An organic compound adsorbent comprising:

a metal organic framework which contains variable pores by a binding structure of metal ions and organic ligands, has a BET specific surface area of 500 m$^2$/g or more, and satisfies Equation 1 below under gas flow having a flow rate of 1 cm/sec or more; and
a carbonaceous support supported with the metal organic framework,

$$[Equation\ 1]$$

$$0.4\ \leq\ x(nm)/y(nm)\ \leq\ 1.0$$

wherein, in Equation 1 above,
x is an average diameter (nm) of an unit pore inlets of the metal organic framework as measured by at least one method among an X-ray diffraction, a gas adsorption, and a mercury porosimeter, and
y is an average diameter (nm) inside an unit pores of the metal organic framework as measured by at least one method among an X-ray diffraction, a gas adsorption, and a mercury porosimeter.

2. The organic compound adsorbent of claim 1, wherein x is between 0.2 nm or more and 1.4 nm or less, and y is between 0.5 nm or more and 2.2 nm or less.

3. The organic compound adsorbent of claim 1, wherein x is between 0.35 nm or more and 1.2 nm or less, and y is between 0.7 nm or more and 2.0 nm or less.

4. The organic compound adsorbent of claim 1, wherein the metal organic framework has a removal rate constant value of 0.03 or more calculated by Equation 2 below:

$$[Equation\ 2]$$

$$C_t = C_i \times e^{-kt}$$

wherein, in Equation 2 above,

$C_t$ is a concentration ($\mu$mol/mol) of a formaldehyde after t minutes,
$C_i$ is a concentration ($\mu$mol/mol) of a formaldehyde at an initial stage,
k is a removal rate constant, and
t is an elapsed time (min).

5. The organic compound adsorbent of claim 1, wherein the metal organic framework has the BET specific surface area of 800 m$^2$/g or more.

6. The organic compound adsorbent of claim 1, wherein the metal ion is an ion of at least one metal selected from a group consisting of sodium (Na), potassium (K), rubidium (Rb), calcium (Ca), strontium (Sr), barium (Ba), scandium (Sc), yttrium (Y), hafnium (Hf), niobium (Nb), chromium (Cr), silver (Ag), indium (In), germanium (Ge), tin (Sn), aluminum (Al), iron (Fe), molybdenum (Mo), tungsten (W), vanadium (V), zinc (Zn), zirconium (Zr), copper (Cu), magnesium (Mg), manganese (Mn), nickel (Ni), titanium (Ti), and lanthanide-based transition metals.

7. The organic compound adsorbent of claim 1, wherein the organic ligand contains at least two functional groups capable of bonding to the metal ion.

8. The organic compound adsorbent of claim 1, wherein the organic ligand is at least one selected from a group consisting of imidazole, alkylimidazole, alkoxyimidazole, terephthalic acid, aminoterephthalic acid, trimesic acid, fumaric acid, and maleic acid.

9. The organic compound adsorbent of claim 1, wherein the carbonaceous support comprises at least one selected from a group consisting of carbon nanotubes, graphene, graphite, amorphous carbon, carbon black, and activated carbon.

10. The organic compound adsorbent of claim 9, wherein the adsorbent contains the metal organic framework in an amount of 3-95 parts by weight with respect to 100 parts by weight of the carbonaceous support.

11. A gas blower including the organic compound adsorbent according to any one of claims 1 to 10 and having a gas flow rate.

[FIG. 1]

[FIG. 2]

[FIG. 3]

(100)   (300)
        (200)

## INTERNATIONAL SEARCH REPORT

| International application No. |
| --- |
| **PCT/KR2022/011852** |

**A. CLASSIFICATION OF SUBJECT MATTER**

**C07F 7/28**(2006.01)i; **A61L 9/01**(2006.01)i; **F24F 1/008**(2019.01)i; **F24F 8/24**(2021.01)i

According to International Patent Classification (IPC) or to both national classification and IPC

**B. FIELDS SEARCHED**

Minimum documentation searched (classification system followed by classification symbols)

C07F 7/28(2006.01); B01D 53/02(2006.01); B01D 59/26(2006.01); B01J 20/22(2006.01); B01J 31/16(2006.01); C01B 32/182(2017.01); C08G 83/00(2006.01); G03G 21/00(2006.01); G03G 21/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 금속유기골격체(metal organic framework, MOF), 흡착(adsorption), 휘발성 유기 화합물(volatile organic compound, VOC), 분리(separation), 제거(removal), 동적 흐름(dynamic flow), 기공 크기(pore size)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-1906043 B1 (INDUSTRY-ACADEMIC COOPERATION FOUNDATION, YONSEI UNIVERSITY) 30 November 2018 (2018-11-30)<br>See paragraphs [0004], [0107] and [0116]; and figure 2. | 1-11 |
| A | KR 10-2019-0106582 A (UNIST(ULSAN NATIONAL INSTITUTE OF SCIENCE AND TECHNOLOGY) et al.) 18 September 2019 (2019-09-18)<br>See paragraphs [0014]-[0018]; and the examples. | 1-11 |
| A | KR 10-2021-0094307 A (DAEGU GYEONGBUK INSTITUTE OF SCIENCE AND TECHNOLOGY) 29 July 2021 (2021-07-29)<br>See entire document. | 1-11 |
| A | JP 2017-198884 A (KYOCERA DOCUMENT SOLUTIONS INC.) 02 November 2017 (2017-11-02)<br>See entire document. | 1-11 |
| A | CN 111205469 A (SUN YAT-SEN UNIVERSITY) 29 May 2020 (2020-05-29)<br>See entire document. | 1-11 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2022** | **18 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/011852**

| Patent document cited in search report | | | Publication date (day/month/year) | Patent family member(s) | | | Publication date (day/month/year) |
|---|---|---|---|---|---|---|---|
| KR | 10-1906043 | B1 | 30 November 2018 | KR 10-2018-0108221 | | A | 04 October 2018 |
| KR | 10-2019-0106582 | A | 18 September 2019 | KR | 10-2053518 | B1 | 11 December 2019 |
| KR | 10-2021-0094307 | A | 29 July 2021 | KR | 10-2284313 | B1 | 03 August 2021 |
| JP | 2017-198884 | A | 02 November 2017 | None | | | |
| CN | 111205469 | A | 29 May 2020 | CN | 111205469 | B | 27 August 2021 |
| | | | | WO | 2021-143112 | A1 | 22 July 2021 |

Form PCT/ISA/210 (patent family annex) (July 2022)

**EP 4 397 666 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210114705

- KR 1020220091911